# FASCICULE DE BREVET EUROPEEN

(11) **EP 0 696 431 B1**
(45) Date de publication et mention de la délivrance du brevet: **15.01.1997**
(21) Numéro de dépôt: 95401809.9
(22) Date de dépôt: 01.08.1995
(51) Int. Cl.: A47J 45/06

(54) **Dispositif pour fixer une queue à un récipient culinaire et récipient culinaire comportant un tel dispositif**
Vorrichtung zum Befestigen eines Griffes an einen Küchenbehälter und Küchenbehälter mit einer solchen Vorrichtung
Device for fixing a grip to a cooking vessel and cooking vessel comprising such a device

(30) Priorité: 10.08.1994 FR 9409913
(43) Date de publication de la demande: 14.02.1996
(73) Titulaire: SEB S.A., F-69130 Ecully (FR)
(72) Inventeur: Raoult, Philippe, F-74370 Pringy (FR)
(74) Mandataire: Keib, Gérard

(56) Documents cités:
- AU-D- 1 079 570
- DE-U- 9 207 076
- FR-A- 2 683 136
- GB-A- 2 118 431

## Description

La présente invention concerne un dispositif pour fixer une queue à la paroi d'un récipient culinaire comprenant une pièce fixée à ladite paroi comportant une ouverture dans laquelle est vissée une vis engagée dans une ouverture allongée pratiquée dans l'extrémité de la queue, une embase métallique engagée sur l'extrémité de la queue étant intercalée entre cette dernière et la paroi du récipient.

Les dispositifs de fixation connus sont soit coûteux, car ils comportent plusieurs pièces, soit peu fiables, car ils entraînent à la longue un desserrage de la vis d'assemblage de la queue, de sorte que celle-ci prend un jeu désagréable.

Ainsi, il est connu dans GB 2 118 431 voir le préambule de la revendication 1 d'utiliser une pièce de fixation emboutie dans une tôle métallique et comportant une partie centrale en saillie vers l'intérieur définissant une cavité avec la paroi du récipient, cette partie centrale en saillie étant entourée par une partie extérieure dont la surface adjacente à la paroi du récipient épouse le profil courbe de celle-ci.

Mais la fixation de la queue est réalisée par une vis et un écrou logé dans la cavité formée par la partie centrale en saillie, ce qui présente les inconvénients d'assemblage précités.

De plus, le contact entre la pièce de fixation et l'embase est réalisé seulement à l'extrémité périphérique de l'embase, ce qui a pour désavantage de procurer une liaison mécanique faible entre l'embase et la pièce de fixation, se traduisant généralement par l'apparition d'un jeu entre la queue du récipient et sa paroi.

Le but de la présente invention est de créer un dispositif de fixation d'une queue à la paroi d'un récipient culinaire, qui soit économique, facile à fixer à la paroi du récipient, permettant un montage aisé de la queue et assurant une fixation sûre et durable.

Suivant l'invention, ce dispositif est caractérisé en ce que la surface latérale de la partie centrale en saillie a une forme adaptée à épouser la surface intérieure de l'embase et est emboîtée dans celle-ci et en ce que la surface frontale de ladite partie en saillie comporte une ouverture prolongée vers l'extérieur par une collerette en saillie, la surface intérieure de cette ouverture étant lisse, le filetage auto-taraudant de la vis de fixation de la queue étant engagé dans cette ouverture.

Cette pièce de fixation est économique puisqu'elle est fabriquée par simple découpage et emboutissage d'une tôle métallique. Elle ne nécessite aucune pièce de renfort, ni écrou, ni rondelle, puisque la vis a un filetage auto-taraudant engagé dans le puits lisse et profond pratiqué dans la partie en saillie de la pièce de fixation.

La partie en saillie comporte une surface latérale qui épouse celle de l'embase, de sorte que celle-ci s'emboîte pratiquement sans jeu sur la pièce de fixation, en renforçant ainsi la liaison mécanique entre la queue et la paroi du récipient.

Selon une version avantageuse de l'invention, la partie extérieure de la pièce emboutie comporte des ouvertures pour le passage de rivets fixés dans la paroi du récipient.

Bien entendu, cette fixation pourrait également être réalisée par soudage.

Selon une version préférée de l'invention, la surface latérale de la partie centrale en saillie présente plusieurs faces sur lesquelles l'embase est emboîtée de façon à empêcher la rotation de celle-ci.

De préférence, ladite pièce emboutie est découpée et emboutie dans une tôle d'aluminium.

La fabrication de cette pièce est ainsi très économique, puisque l'aluminium est facile à découper et à emboutir. De plus, comme l'aluminium est relativement mou, le vissage de la vis à filetage auto-taraudant dans l'ouverture lisse pratiquée dans la partie en saillie de la pièce de fixation, ne pose aucune difficulté, tout en empêchant tout desserrage de cette vis.

D'autres particularités et avantages de l'invention apparaîtront encore dans la description ci-après.

Aux dessins annexés donnés à titre d'exemples non limitatifs:
- la figure 1 est une vue en coupe d'une casserole à laquelle est fixée une queue, au moyen d'un dispositif conforme à l'invention;
- la figure 2 est une vue analogue à la figure 1 concernant une poêle;
- la figure 3 montre une sauteuse, sa queue et ses organes de fixation étant non encore assemblée;
- la figure 4 est une vue en plan du devant de la pièce de fixation du dispositif selon l'invention;
- la figure 5 est une vue en coupe suivant le plan V-V de la figure 4;
- la figure 6 est une vue de dessus selon F de la pièce de fixation, avec demi-coupe suivant le plan médian de symétrie de la pièce.

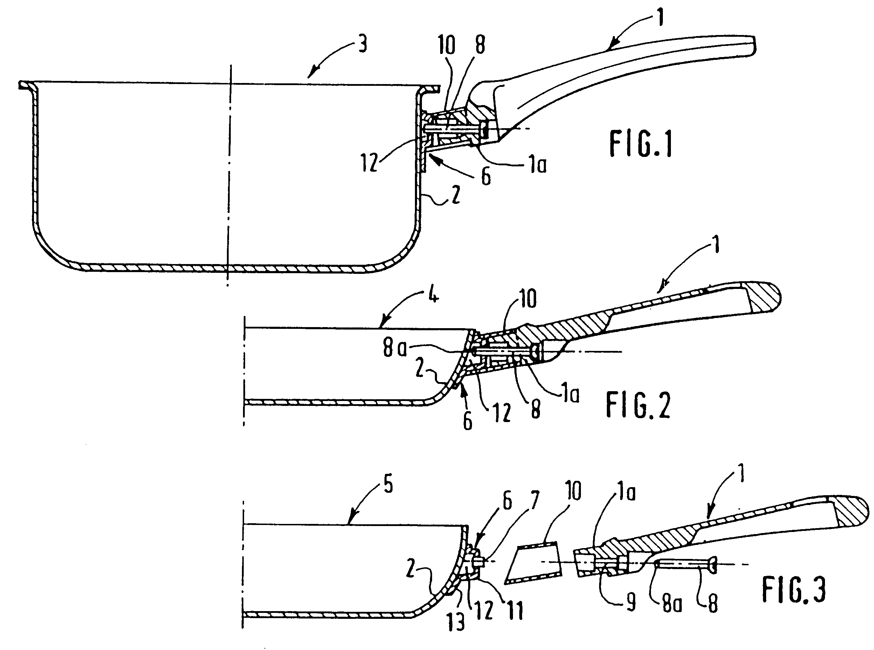

En référence aux figures 1 à 3, le dispositif pour fixer une queue 1 à la paroi 2 d'un récipient culinaire, tel que casserole 3, poêle 4 ou sauteuse 5, comprend une pièce 6 fixée à ladite paroi 2 et comportant une ouverture 7 dans laquelle est vissée une vis 8 engagée dans une ouverture allongée 9 pratiquée dans l'extrémité la de la queue 1. Une embase métallique 10 est engagée sur l'extrémité la de la queue 1 et est intercalée entre cette dernière et la paroi 2 du récipient 3, 4, 5.

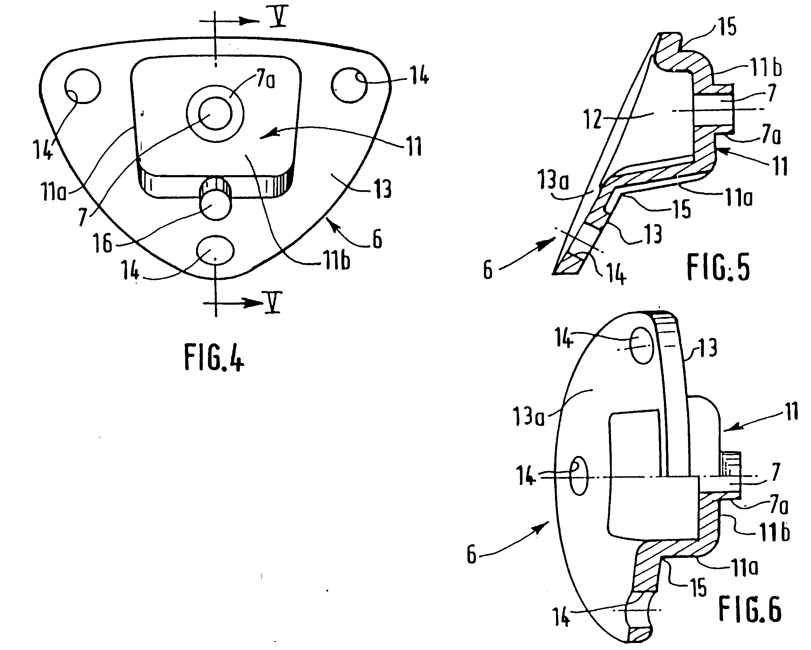

Conformément à l'invention, la pièce 6 est emboutie dans une tôle métallique et comporte (voir figures 4, 5 et 6) une partie centrale en saillie vers l'extérieur définissant une cavité 12 avec la paroi 2 du récipient 3, 4, 5. Cette partie centrale en saillie 11 est entourée par une partie extérieure 13 dont la surface 13a adjacente à la paroi 2 du récipient 3, 4, 5 épouse le profil courbe de celle-ci, comme montré sur les figures 1 à 3.

La surface latérale 11a de la partie centrale en saillie 11 a une forme adaptée à la surface intérieure de l'embase 10 et est engagée dans celle-ci (voir figures 1 et 2). La surface frontale 11b de ladite partie en saillie 11 comporte une ouverture 7 prolongée vers l'extérieur par une collerette en saillie 7a. La surface intérieure de cette ouverture 7 est lisse, comme montré par les figures 5 et 6.

Sur les figures 1 et 2, le filetage auto-taraudant 8a de la vis 8 de fixation de la queue 1 est engagé dans cette ouverture 7.

La partie extérieure 13 de la pièce emboutie 6 comporte des ouvertures 14 pour le passage de rivets ou analogues fixés dans la paroi du récipient.

La surface latérale 11a de la partie centrale en saillie présente plusieurs faces sur lesquelles l'embase 10 vient s'emboîter de façon à empêcher la rotation de celle-ci.

Par ailleurs, la surface latérale 11a de la partie en saillie 11 est raccordée à la partie extérieure par un épaulement 15 sur lequel vient en appui l'extrémité de l'embase 10.

De préférence, la pièce emboutie 6 est découpée et emboutie dans une tôle d'aluminium.

D'autre part, la partie centrale en saillie 11 comporte sur sa surface latérale dirigée vers le fond du récipient 3, 4, 5, une ou plusieurs ouvertures 16 (voir figure 4) pour l'écoulement de l'eau pouvant pénétrer dans la cavité 12.

Malgré sa faible épaisseur (2 à 3 mm) et le fait qu'elle soit en aluminium, la pièce de fixation présente une grande rigidité du fait de sa partie centrale 11 en saillie et de sa partie extérieure 13 épousant le profil courbe de la paroi du récipient.

Cette partie centrale 11 en saillie permet l'emboîtement de l'embase 10 et empêche la rotation de celle-ci.

Une fois la pièce de fixation 6 rivetée à la paroi 2 du récipient, il suffit d'emboîter l'embase 10 sur la partie en saillie 11 de la pièce, d'emboîter l'extrémité de la queue 1 dans l'embase 10, d'engager la vis 8 dans l'ouverture allongée 9 de la queue et dans l'ouverture 7 de la pièce 6.

Il suffit alors de visser la vis 8 de façon que le filetage auto-taraudant de celle-ci vienne en prise avec la surface interne de l'ouverture 7.

La fixation ainsi obtenue est à la fois rigide et indesserrable.

## Revendications

1. Dispositif pour fixer une queue (1) à la paroi (2) d'un récipient culinaire (3, 4, 5) comprenant une pièce (6) fixée à ladite paroi (2) comportant une ouverture (7) dans laquelle est vissée une vis (8) engagée dans une ouverture allongée (9) pratiquée dans l'extrémité de la queue (1), une embase métallique (10) engagée sur l'extrémité de la queue (1) étant intercalée entre cette dernière et la paroi (2) du récipient, ladite pièce (6) étant emboutie dans une tôle métallique et comportant une partie centrale (11) en saillie vers l'extérieur définissant une cavité (12) avec la paroi (2) du récipient, cette partie centrale en saillie (11) étant entourée par une partie extérieure (13) dont la surface adjacente à la paroi (2) du récipient épouse le profil courbe de celle-ci, caractérisé en ce que la surface latérale (11a) de la partie centrale en saillie (11) a une forme adaptée à épouser la surface intérieure de l'embase (10) et est emboîtée dans celle-ci et en ce que la surface frontale (11b) de ladite partie en saillie (1) comporte une ouverture (7) prolongée vers l'extérieur par une collerette (7a) en saillie, la surface intérieure de cette ouverture (7) étant lisse, le filetage auto-taraudant de la vis (8) de fixation de la queue (1) étant engagé dans cette ouverture (7).

2. Dispositif conforme à la revendication 1, caractérisé en ce que la partie extérieure (13) de la pièce emboutie comporte des ouvertures (14) pour le passage de rivets fixés dans la paroi du récipient.

3. Dispositif conforme à la revendication 1, caractérisé en ce que la surface latérale (11a) de la partie centrale en saillie présente plusieurs faces sur lesquelles l'embase (10) est emboîtée de façon à empêcher la rotation de celle-ci.

4. Dispositif conforme à l'une des revendications 1 à 3, caractérisé en ce que la surface latérale (11a) de ladite partie en saillie (11) est raccordée à la partie extérieure (13) par un épaulement (15) sur lequel vient en appui l'extrémité de l'embase (10).

5. Dispositif conforme à l'une des revendications 1 à 4, caractérisé en ce que ladite pièce emboutie (6) est découpée et emboutie dans une tôle d'aluminium.

6. Dispositif conforme à l'une des revendications 1 à 5, caractérisé en ce que ladite partie centrale (11) en saillie comporte sur sa surface latérale dirigée vers le fond du récipient, une ouverture (16) pour l'écoulement de l'eau.

7. Récipient culinaire comportant une queue (1) fixée à sa paroi (2) par un dispositif conforme à l'une des revendications 1 à 6.

## Claims

1. A system for fixing a handle (1) to the wall (2) of a cooking vessel (3, 4, 5) comprising a part (6) fixed to said wall (2) having an opening (7) in which is screwed a screw (8) engaging in an elongate opening (9) formed in the end of the handle (1), a metal base (10) which is engaged on the end of the handle (1) being interposed between the latter and the wall (2) of the vessel, said part (6) being pressed from a metal sheet and comprising an outwardly projecting central part (11) defining a cavity (12) with the wall (2) of the vessel, said central projecting part (11) being surrounded by an outer part (13) whose surface adjacent the wall (2) of the vessel matches the curved profile thereof, characterised in that the side surface (11a) of the central projecting part (11) has a shape adapted to match the inner surface of the base (10) and is fitted in the latter and in that the front surface (11b) of said projecting part (1) has an opening (7) which is extended outwardly by a projecting collar (7a), the inner surface of said opening (7) being smooth, the self-tapping screwthread of the screw (8) for fixing the handle (1) being engaged in said opening (7).

2. A system according to claim 1, characterised in that the outer part (13) of the pressing comprises openings (14) for the passage of rivets fixed in the wall of the vessel.

3. A system according to claim 1, characterised in that the side surface (11a) of the central projecting part has a number of surfaces on which the base (10) is fitted so as to prevent the rotation thereof.

4. A system according to any one of claims 1 to 3, characterised in that the side surface (11a) of the said projecting part (11) is connected to the outer part (13) by a shoulder (15) on which the end of the base (10) bears.

5. A system according to any one of claims 1 to 4, characterised in that the said pressing (6) is cut out and pressed from a sheet of aluminium.

6. A system according to any one of claims 1 to 5, characterised in that the said central projecting part (11) has an opening (16) for the outflow of water on its side surface facing the bottom of the vessel.

7. A cooking vessel having a handle (1) fixed to its wall (2) by a system according to any one of claims 1 to 6.

## Patentansprüche

1. Vorrichtung zum Befestigen eines Stiels (1) an der Wand (2) eines Kochgefäßes (3, 4, 5) mit einem an dieser Wand (2) befestigten Teil (6), das eine Öffnung (7) aufweist, in die eine Schraube (8) eingeschraubt ist, die in eine langgestreckte, an dem Ende des Stiels (1) angebrachte Öffnung (9) eingreift, wobei ein an das Ende des Stiels angreifendes Metallverbindungsstück (10) zwischen diesem und der Wand (2) des Gefäßes angeordnet ist, wobei das Teil (6) mit einer Ausbauchung versehen aus Metallblech hergestellt ist und einen nach außen vorspringenden Mittelabschnitt (11) umfaßt, der mit der Wand (2) des Gefäßes einen Hohlraum (12) begrenzt, wobei dieser vorspringende Mittelabschnitt (11) von einem Außenabschnitt (13) umgeben ist' dessen zur Wand (2) des Gefäßes benachbarte Fläche sich deren gekrümmtem Profil anpaßt, dadurch gekennzeichnet, daß die Seitenfläche (11a) des vorspringenden Mittelabschnitts (11) eine der Innenfläche des Verbindungsstücks (10) angepaßte Form aufweist und in dieses eingesetzt ist und daß die Stirnseite (11b) dieses vorspringenden Abschnitts (11) eine nach außen mittels eines vorspringenden Kragens (7a) verlängerte Öffnung (7) aufweist, wobei die Innenfläche dieser Öffnung (7) glatt ist und das selbstschneidende Gewinde der Befestigungsschraube (8) des Stiels (1) in diese Öffnung (7) eingreift.

2. Vorrichtung nach Anspruch 1, dadurch gekennzeichnet, daß der Außenabschnitt (13) des ausgebauchten Teils Öffnungen (14) zum Durchgreifen mittels in der Wand des Gefäßes befestigter Nieten umfaßt.

3. Vorrichtung nach Anspruch 1, dadurch gekennzeichnet, daß die Seitenfläche (11a) des vorspringenden Mittelabschnitts mehrere Flächen aufweist, auf welche das Verbindungsstück (10) derart aufgesetzt ist, daß ein Verdrehen ausgeschlossen ist.

4. Vorrichtung nach einem der Ansprüche 1 bis 3, dadurch gekennzeichnet, daß die Seitenfläche (11a) des vorspringenden Abschnitts (11) mit dem Außenabschnitt (13) über eine Schulter (15) verbunden ist, an welcher das Ende des Verbindungsstücks (10) zur Anlage kommt.

5. Vorrichtung nach einem der Ansprüche 2 bis 4, dadurch gekennzeichnet, daß das ausgebauchte Teil (6) aus Aluminiumblech ausgestanzt und mit einer Ausbauchung versehen ist.

6. Vorrichtung nach einem der Ansprüche 1 bis 5, dadurch gekennzeichnet, daß der vorspringende Mittelabschnitt (11) auf seiner dem Boden des Gefäßes zugewandten Seitenfläche eine Öffnung (16) zum Ablaufen von Wasser umfaßt.

7. Kochgefäß umfassend einen an seiner Wand (2) mittels einer Vorrichtung nach einem der Ansprüche 1 bis 6 befestigten Stiel.
